# EUROPÄISCHE PATENTSCHRIFT

(11) **EP 4 308 457 B1**
(45) Veröffentlichungstag und Bekanntmachung des Hinweises auf die Patenterteilung: **23.07.2025**
(21) Anmeldenummer: 22712392.4
(22) Anmeldetag: 10.03.2022
(51) Int. Cl.: B64D 35/04, B64D 35/08

(54) **LUFTFAHRTANTRIEBSSYSTEM EINES FLUGGERÄTES**
AIRCRAFT PROPULSION SYSTEM
SYSTÈME DE PROPULSION D'UN AÉRONEF

(30) Priorität: 15.03.2021 DE 102021202487
(43) Veröffentlichungstag der Anmeldung: 24.01.2024
(73) Patentinhaber: Airbus Helicopters Technik GmbH, 34379 Calden (DE)
(72) Erfinder: LITZBA, Jörg, 34233 Fuldatal (DE)
(74) Vertreter: GPI Brevets
(86) Internationale Anmeldenummer: PCT/EP2022/056193
(87) Internationale Veröffentlichungsnummer: WO 2022/194669

(56) Entgegenhaltungen:
- EP-A1- 3 395 680
- US-A- 2 893 525
- US-A- 3 220 283
- US-A1- 2009 224 096
- US-A1- 2018 327 104
- US-A1- 2019 344 877

## Beschreibung

Die Erfindung bezieht sich auf ein Fluggerät mit zwei Triebwerken und einem Luftfahrtantriebssystem eines Fluggerätes mit zwei Triebwerken, mit jeweils einer von einem der Triebwerke drehbar antreibbaren Verbindungswelle, wobei beide Verbindungswellen mit ihren einander zugewandten Enden drehbar antreibbar miteinander verbunden sind.

Ein derartiges Luftfahrtantriebssystem ist aus der EP 448 672 B1 bekannt. Dabei ist durch eine Getriebeanordnung zwischen den Verbindungswellen eine Hilfsversorgungseinrichtung des Fluggeräts antreibbar. Bei dem Fluggerät kann es sich beispielsweise um ein Flugzeug mit zwei Triebwerken handeln, die durch die Verbindungswellen miteinander verbunden sind. Aber auch bei Drehflüglern mit zwei Triebwerken, die durch die Verbindungswellen miteinander verbunden sind, ist die Erfindung vorteilhaft anwendbar. Ein weiteres Fluggerät ist aus EP 339 5680 A1 bekannt.

Aufgabe der Erfindung ist es ein Luftfahrtantriebssystem der eingangs genannten Art zu schaffen, das eine Mehrzahl Betriebsarten ermöglicht und zu einer größeren Betriebssicherheit bei geringem Bauteilbedarf führt.

Diese Aufgabe wird erfindungsgemäß dadurch gelöst, dass beide Verbindungswellen mit ihren einander zugewandten Enden über eine öffenbare Kupplung mit einem der einander zugewandten Enden der Verbindungswellen drehbar antreibbar verbunden sind, und wobei zwischen dem zur öffenbaren Kupplung führenden Ende einer der Verbindungswellen und der öffenbaren Kupplung ein bei Überschreitung eines bestimmten auf diese Verbindungswelle einwirkenden Drehmoments öffnendes Überlastsicherungselement angeordnet ist.

Das Fluggerät kann z.B. ein Flugzeug oder auch ein Drehflügler sein.

Durch diese Ausbildung kann man durch Öffnen der Kupplung ein Triebwerk abschalten. Dies hat den Vorteil, dass bei einer Fehlfunktion eines Triebwerks, dieses Triebwerk abgeschaltet werden kann. Dabei wird die Funktion des anderen Triebwerks nicht beeinflusst und der weitere Flugbetrieb nicht gefährdet.

Auch kann man im Flugbetrieb eines der Triebwerke abschalten um durch Nutzung nur eines Triebwerks Treibstoff wie z.B. Kerosin zu sparen.

Eine weitere mögliche Betriebsart besteht darin, dass im Bodenbetrieb z.B. nach einer Landung nicht beide Triebwerke abgestellt werden müssen. Es reicht eines der Triebwerke abzuschalten und die Kupplung zu öffnen, so dass man flexibler und schneller und trotzdem Treibstoff sparend im Bodenbetrieb sich bewegen kann. Vorzugsweise wird dabei das Triebwerk abgeschaltet, das sich auf der Seite der Frachttüre befindet.

Da nur eine einzige Kupplung vorhanden ist, ist die Anzahl der Bauteile gering gehalten. Damit wird sowohl der erforderliche Bauraum als auch Gewicht gespart. Weiterhin führt dies zu einer Kostenreduzierung des Luftfahrtantriebssystems im Vergleich zur möglichen Nutzung mehrerer Kupplungen sowie zu einer Verbesserung der Zuverlässigkeit des Luftfahrtantriebssystems.

Um durch die Triebwerke weitere Einrichtungen mit einem Drehantrieb versorgen zu können, so dass dafür bauraum- und gewichtsparend kein separater Antrieb erforderlich ist, kann die eine der Verbindungswellen mit ihrem einen Ende über eine Getriebeeinheit mit der öffenbaren Kupplung drehbar antreibbar verbunden sein und die öffenbare Kupplung mit dem einen Ende der zweiten der Verbindungswellen drehbar antreibbar verbunden sein.

Ist zwischen dem zur Getriebeeinheit oder zur Kupplung führenden Ende einer der Verbindungswellen ein bei Überschreitung eines bestimmten auf diese Verbindungswelle einwirkenden Drehmoments öffnendes Überlastsicherungselement angeordnet, so erfolgt bei einem Defekt des mit dieser Verbindungswelle verbundenen Triebwerks und Überlastung dieser Verbindungswelle sofort durch Öffnen des Überlastsicherungselements eine Trennung des defekten Triebwerks, so dass das andere Triebwerk von diesem Defekt unbeeinflußt weiterarbeiten kann.

Zu einer kompakten, nur geringen erforderlichen Bauraum benötigenden Ausbildung führt es, wenn die Kupplung und/oder die Getriebeeinheit und/oder das Überlastsicherungselement eine Baueinheit bilden.

Die Kupplung und die Getriebeeinheit und gegebenenfalls das Überlastsicherungselement können in der Mitte eines Flügels des Fluggerätes angeordnet sein, wobei sie dort beispielsweise in einem Rumpf des Fluggerätes angeordnet sein können. Alternativ bevorzugt können die Kupplung und die Getriebeeinheit auch in einer Flügelstruktur im Bereich des Rumpfs angeordnet sein. In beiden Fällen sind sie vor Umwelteinflüssen gut geschützt und für Wartungsarbeiten und Reparaturen leicht zugänglich.

Die beiden Verbindungswellen können koaxial zueinander angeordnet sein.

Es ist aber auch möglich, dass die beiden Verbindungswellen von einer Koaxialität zueinander abweichend sich erstrecken.

Damit dabei die beiden Verbindungswellen auf einfache Weise drehbar antreibbar miteinander verbindbar sind, kann die Getriebeeinheit eine Kegelradgetriebeeinheit sein.

In einfacher Ausbildung kann das Überlastsicherungselement ein Scherbolzen sein.

Eine weitere durch eines der Triebwerke antreibbare Einrichtung kann eine durch die Getriebeeinheit antreibbare Hilfsversorgungseinrichtung des Fluggeräts sein.

Hilfsversorgungseinrichtungen können z.B. eine Hydraulikpumpe, ein Kompressor oder ein Generator sein.

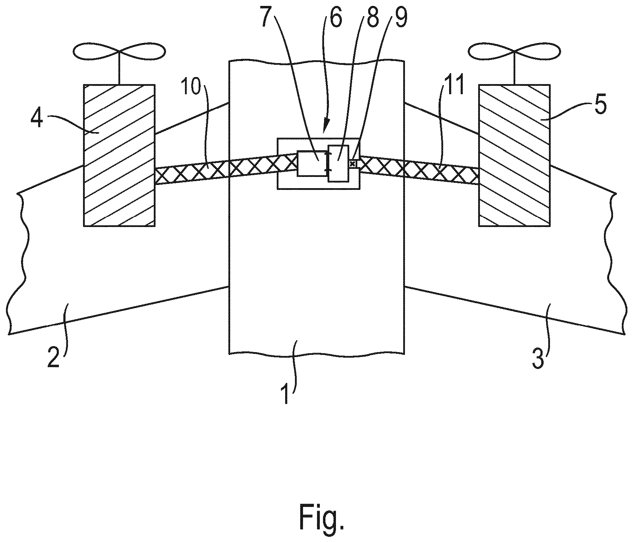

Ein Ausführungsbeispiel der Erfindung ist in der Zeichnung dargestellt und wird im Folgenden näher beschrieben. Die einzige Figur der Zeichnung zeigt eine Prinzipdarstellung eines Ausschnitts einer Draufsicht eines Fluggerätes.

Von einem Rumpf 1 des Fluggerätes erstrecken sich einander entgegengesetzt ein erster Flügel 2 und ein zweiter Flügel 3.

Der erste Flügel 2 trägt ein erstes Triebwerk 4 und der zweite Flügel 3 ein zweites Triebwerk 5.

Zwischen den beiden Flügeln 2 und 3 ist im Rumpf 1 in einem Gehäuse eine Baueinheit 6 angeordnet, die aus einer Getriebeeinheit 7, einer öffenbaren Kupplung 8 und einem Überlastsicherungselement 9 besteht.

Von dem ersten Triebwerk 4 führt eine erste Verbindungswelle 10 zu der Getriebeeinheit 7, die so von dem ersten Triebwerk 4 drehbar antreibbar ist, deren der ersten Verbindungswelle 10 entgegengesetzter Ausgang mit der Kupplung 8 verbunden ist.

Von dem zweiten Triebwerk 5 führt eine zweite Verbindungswelle 11 über das Überlastsicherungselement 9 zu der Kupplung 8.

Über die Getriebeeinheit 7, die im Normalbetrieb geschlossene Kupplung 8 und das Überlastsicherungselement 9 sind also die erste Verbindungswelle 10 und die zweite Verbindungswelle 11 drehfest miteinander verbunden.

Diese drehfeste Verbindung ist zum einen durch Öffnen der Kupplung 8 öffenbar.

Zum anderen ist diese drehfeste Verbindung aber auch durch das Überlastsicherungselement 9 öffenbar, wenn das auf ihn einwirkende Drehmoment ein bestimmtes vorgegebenes Drehmoment überschreitet.

Die beiden Verbindungswellen 10 und 11 erstrecken sich um einen Winkel zueinander geneigt, also von einer Koaxialität zueinander abweichend. Aus diesem Grund ist die Getriebeeinheit 7 eine Kegelradgetriebeeinheit.

### Bezugszeichen

- 1: Rumpf
- 2: erster Flügel
- 3: zweiter Flügel
- 4: erstes Triebwerk
- 5: zweites Triebwerk
- 6: Baueinheit
- 7: Getriebeeinheit
- 8: Kupplung
- 9: Überlastsicherungselement
- 10: erste Verbindungswelle
- 11: zweite Verbindungswelle

## Patentansprüche

1. Fluggerät mit zwei Triebwerken (4, 5) und einem Luftfahrtantriebssystem mit jeweils einer von einem der Triebwerke (4) drehbar antreibbaren Verbindungswelle (10, 11), wobei beide Verbindungswellen (10, 11) mit ihren einander zugewandten Enden drehbar antreibbar miteinander verbunden sind, wobei beide Verbindungswellen (10, 11) mit ihren einander zugewandten Enden über eine öffenbare Kupplung (8) mit einem der einander zugewandten Enden der Verbindungswellen (10, 11) drehbar antreibbar verbunden sind, **dadurch gekennzeichnet, dass** zwischen dem zur öffenbaren Kupplung (8) führenden Ende einer der Verbindungswellen (11) und der öffenbaren Kupplung (8) ein bei Überschreitung eines bestimmten auf diese Verbindungswelle (11) einwirkenden Drehmoments öffnendes Überlastsicherungselement (9) angeordnet ist.

2. Fluggerät nach Anspruch 1, **dadurch gekennzeichnet, dass** die eine der Verbindungswellen (10) mit ihrem einen Ende über eine Getriebeeinheit (7) mit der öffenbaren Kupplung (8) drehbar antreibbar verbunden ist und die öffenbare Kupplung (8) über das Überlastsicherungselement (9) mit dem einen Ende der zweiten der Verbindungswellen (11) drehbar antreibbar verbunden ist.

3. Fluggerät nach Anspruch 2, **dadurch gekennzeichnet, dass** die öffenbare Kupplung (8) und/oder die Getriebeeinheit (7) und/oder das Überlastsicherungselement (9) eine Baueinheit (6) bilden.

4. Fluggerät nach Anspruch 2 oder 3, **dadurch gekennzeichnet, dass** die öffenbare Kupplung (8) und die Getriebeeinheit (7) und gegebenenfalls das Überlastsicherungselement (9) in der Mitte eines Flügels in einem Rumpf des Fluggerätes oder in einer Flügelstruktur im Bereich des Rumpfs angeordnet sind.

5. Fluggerät nach einem der vorhergehenden Ansprüche, **dadurch gekennzeichnet, dass** die beiden Verbindungswellen koaxial zueinander angeordnet sind.

6. Fluggerät nach einem der Ansprüche 2 bis 4, **dadurch gekennzeichnet, dass** die beiden Verbindungswellen (10, 11) von einer Koaxialität zueinander abweichend sich erstrecken.

7. Fluggerät nach Anspruch 6, **dadurch gekennzeichnet, dass** die Getriebeeinheit (7) eine Kegelradgetriebeeinheit ist.

8. Fluggerät nach Anspruch 1, **dadurch gekennzeichnet, dass** das Überlastsicherungselement (9) ein Scherbolzen ist.

9. Fluggerät nach Anspruch 2, **dadurch gekennzeichnet, dass** durch die Getriebeeinheit eine Hilfsversorgungseinrichtung des Fluggeräts antreibbar ist.

## Claims

1. An aircraft with two engines (4, 5) and an aviation propulsion system each with a connecting shaft (10, 11) which is drivable in rotation by one of the engines (4), wherein mutually facing ends of both connecting shafts (10, 11) are connected to each other in a rotatably drivable manner, wherein both connecting shafts (10, 11) are connected by their mutually facing ends in a rotatably drivable manner to one of the mutually facing ends of the connecting shafts (10, 11) via an openable coupling (8), **characterised in that**
an overload protection element (9) is arranged between an end of one of the connecting shafts (11) leading to the openable coupling (8) and the openable coupling (8), which opens when a certain torque acting on this connecting shaft (11) is exceeded.

2. The aircraft of claim 1, **characterised in that** one end of one of the connecting shafts (10) is connected to the openable coupling (8) in a rotatably drivable manner via a gearbox unit (7), and the openable coupling (8) is, by means of the overload protection element (9), connected in a rotatably drivable manner to one end of the second of the connecting shafts (11).

3. The aircraft of claim 2, **characterised in that** the openable coupling (8) and/or the gearbox unit (7) and/or the overload protection element (9) form a structural unit (6).

4. The aircraft of claim 2 or 3, **characterised in that** the openable coupling (8) and the gearbox unit (7) and optionally the overload protection element (9) are arranged in the centre of a wing in a fuselage of the aircraft or in a wing structure in an area of the fuselage.

5. The aircraft of any one of the preceding claims, **characterised in that** the two connecting shafts are arranged coaxially with respect to each other.

6. The aircraft of one of claims 2 to 4, **characterised in that** the two connecting shafts (10, 11) extend in a manner that deviates from coaxially with respect to each other.

7. The aircraft of claim 6, **characterised in that** the gearbox unit (7) is a bevel gear unit.

8. The aircraft of claim 1, **characterised in that** the overload protection element (9) is a shear bolt.

9. The aircraft of claim 2, **characterised in that** an auxiliary supply device of the aircraft can be driven by the gearbox unit.

## Revendications

1. Aéronef comprenant deux moteurs (4, 5) et un système de propulsion aéronautique avec respectivement un arbre de liaison (10, 11) pouvant être entraîné en rotation par l'un des moteurs (4), dans lequel les deux arbres de liaison (10, 11) sont reliés l'un à l'autre par leurs extrémités tournées l'une vers l'autre de manière à pouvoir être entraînés en rotation, dans lequel les deux arbres de liaison (10, 11) sont reliés par leurs extrémités tournées l'une vers l'autre par l'intermédiaire d'un embrayage (8) pouvant être ouvert de manière à pouvoir être entraînés en rotation par l'une des extrémités tournées l'une vers l'autre des arbres de liaison (10, 11), **caractérisé en ce que**
un élément de protection contre les surcharges (9) s'ouvrant en cas de dépassement d'un certain couple agissant sur ledit arbre de liaison (11) est agencé entre l'extrémité de l'un des arbres de liaison (11) menant à l'embrayage (8) pouvant être ouvert et l'embrayage (8) pouvant être ouvert.

2. Aéronef selon la revendication 1, **caractérisé en ce qu'**un des arbres de liaison (10) est relié à l'embrayage (8) pouvant être ouvert par une de ses extrémités par l'intermédiaire d'une boîte de vitesses (7) de manière à pouvoir être entrainé en rotation et l'embrayage (8) pouvant être ouvert est relié à l'une des extrémités du deuxième arbre de liaison (11) par l'intermédiaire de l'élément de protection contre les surcharges (9) de manière à pouvoir être entrainé en rotation.

3. Aéronef selon la revendication 2, **caractérisé en ce que** l'embrayage (8) pouvant être ouvert et/ou la boîte de vitesses (7) et/ou l'élément de protection contre les surcharges (9) forment une unité modulaire (6).

4. Aéronef selon la revendication 2 ou 3, **caractérisé en ce que** l'embrayage (8) pouvant être ouvert et la boîte de vitesses (7) et éventuellement l'élément de protection contre les surcharges (9) sont agencés au centre d'une aile dans un fuselage de l'aéronef ou dans une structure d'aile dans une région du fuselage.

5. Aéronef selon l'une quelconque des revendications précédentes, **caractérisé en ce que** les deux arbres de liaison sont agencés coaxialement l'un par rapport à l'autre.

6. Aéronef selon l'une quelconque des revendications 2 à 4, **caractérisé en ce que** les deux arbres de liaison (10, 11) s'étendent de manière à diverger l'un de l'autre par rapport à une coaxialité.

7. Aéronef selon la revendication 6, **caractérisé en ce que** la boîte de vitesses (7) est une boîte de vitesses à engrenage conique.

8. Aéronef selon la revendication 1, **caractérisé en ce que** l'élément de protection contre les surcharges (9) est un boulon de cisaillement.

9. Aéronef selon la revendication 2, **caractérisé en ce qu'**un dispositif d'alimentation auxiliaire de l'aéronef peut être entraîné par la boîte de vitesses.
